# EUROPEAN PATENT APPLICATION

(11) **EP 4 550 480 A2**
(43) Date of publication of application: **07.05.2025**
(21) Application number: 24210735.7
(22) Date of filing: 05.11.2024
(51) Int. Cl.: H01M 4/66, H01M 4/88, H01M 4/90

(54) **SINGLE-ATOM CATALYST AND METHOD OF PREPARING SAME**

(30) Priority: 06.11.2023 KR 20230151830; 11.09.2024 KR 20240124216
(71) Applicant: SK Innovation Co., Ltd., Seoul 03188 (KR)
(72) Inventor: LEE, Chung Seop, 34124 Daejeon (KR); KIM, Tae Wan, 34124 Daejeon (KR); JANG, Yoon Hyuk, 34124 Daejeon (KR); JEON, Tae Hwa, 34124 Daejeon (KR)
(74) Representative: Prüfer & Partner mbB Patentanwälte · Rechtsanwälte

(57) **Abstract**

Proposed is a single-atom catalyst (SAC) including a nitrogen-doped carbon structure and a single-atom metal, wherein the single-atom metal forms a coordination bond with a nitrogen atom of the nitrogen-doped carbon structure. When using an electrochemical cell having a pair of electrodes including the single-atom catalyst in an electrochemical advanced oxidation process (EAOP) for water treatment, organic contaminants in wastewater are efficiently degradable under mild pH conditions.

## Description

### BACKGROUND OF THE DISCLOSURE

### 1. Field of the Disclosure

Proposed are a single-atom catalyst (SAC) and a method of preparing the same.

### 2. Description of the Related Art

Electrochemical advanced oxidation processes (EAOPs) are highly efficient, use renewable energy, and are likely to enable modularization in decentralized systems, which have led to a growing interest in such electrochemical advanced oxidation processes in the water treatment field.

Electrochemical advanced oxidation processes involve the generation of hydroxyl radicals (·OH) in anodes and the use thereof for the oxidation of non-degradable organic contaminants in wastewater. Cathodes allow hydrogen peroxide (H₂O₂), a precursor of hydroxyl radicals, to be generated through selective oxygen reduction.

Over the past decade, electrochemical advanced oxidation processes have made significant advances, and various research is still in progress even to this day to improve electrochemical advanced oxidation processes. Recently, research has also been conducted on single-atom catalysts for use thereof in electrochemical advanced oxidation processes.

### [Document of related art]

### [Patent Document]

(Patent Document 1) KR 10-2342524 B1

### SUMMARY OF THE INVENTION

According to an aspect of the present disclosure, a single-atom catalyst capable of extending the optimal pH range of electrochemical advanced oxidation and preventing the adsorption of hydroxyl radicals to an electrode can be provided.

According to the present disclosure, provided is a single-atom catalyst, which includes a nitrogen-doped carbon structure and a single-atom metal, wherein the single-atom metal forms a coordination bond with a nitrogen atom of the nitrogen-doped carbon structure.

According to the embodiment, the nitrogen-doped carbon structure may be carbon black. According to the embodiment, the single-atom metal may be cobalt (Co).

According to the embodiment, the single-atom metal in the single-atom catalyst may have a content of greater than 0 wt% and less than 3 wt%.

According to the present disclosure, provided is a method of preparing a single-atom catalyst, which includes the following steps: preparing a mixed solution by mixing a single-atom metal precursor and a nitrogen dopant precursor in a solvent; preparing a suspension by mixing a carbon structure powder in the mixed solution; preparing a single-atom catalyst precursor by shaking and drying the suspension; and preparing a single-atom catalyst by calcining the single-atom catalyst precursor.

According to the present disclosure, provided is an electrode, which includes a substrate and a catalyst layer applied on the substrate through coating, wherein the catalyst layer includes the single-atom catalyst described above.

According to the embodiment, the substrate may include stainless steel.

According to the embodiment, a thickness ratio of the substrate to the catalyst layer may be in the range of 10:1 to 1000:1.

According to the present disclosure, provided is an electrochemical cell including the electrode described above as a cathode and an anode.

According to the present disclosure, provided is an electrochemical water treatment method using the electrochemical cell described above.

According to an embodiment of the present disclosure, an electrochemical advanced oxidation process can be performed under various pH conditions, and the organic compound removal efficiency from wastewater by the electrochemical advanced oxidation process can increase.

### BRIEF DESCRIPTION OF THE DRAWINGS

FIG. 1A is a schematic diagram illustrating a process of forming a chemical structure of a single-atom catalyst according to an embodiment;
FIG. 1B is a schematic diagram illustrating a process of forming an electrode including a single-atom catalyst, according to an embodiment;
FIGS. 2A to 2F are high-angle annular dark-field scanning transmission electron microscopy (HAADF-STEM) images of single-atom catalysts according to an embodiment;
FIGS. 3A and 3B are X-ray diffraction (XRD) diagrams of single-atom catalysts according to an embodiment;
FIG. 4A shows X-ray absorption near edge structure (XANES) spectra of single-atom catalysts according to an embodiment, and FIG. 4B shows Fourier-transformed k²-weighted extended X-ray absorption fine structure (EXAFS) spectra of single-atom catalysts according to an embodiment;
FIGS. 4C and 4D show EXAFS fitting results of the first shell to a single-atom catalyst according to an embodiment;
FIGS. 4E to 4H show wavelet transform (WT) analysis results of χ (k) for single-atom catalysts according to an embodiment;
FIG. 5 is a soft X-ray absorption spectroscopy (XAS) plot for a single-atom catalyst according to an embodiment;
FIG. 6 is an electron paramagnetic resonance (EPR) spectroscopy graph for a single-atom catalyst according to an embodiment;
FIG. 7A shows EPR spectra of 5,5-dimethyl-1-pyrroline N-oxide (DMPO) adducts depending on current densities in an embodiment, and FIG. 7B shows EPR spectra of the DMPO adducts depending on initial pH values in an embodiment;
FIGS. 8A and 8B show color changes in H₂O₂ test strips over time according to an embodiment, and FIG. 8C is a linear sweep voltammetry (LSV) profile of a single-atom catalyst electrode according to an embodiment;
FIG. 9A shows changes in absorbance for a particular wavelength over time in an embodiment, and FIG. 9B is a plot showing changes in hydrogen peroxide concentration over time in an embodiment;
FIG. 10 shows color changes in H₂O₂ test strips over time in an embodiment; and
FIGS. 11A and 11B are plots showing the electrochemical oxidation efficiency of phenol using a single-atom catalyst electrode under conditions at different current densities and initial pH values according to an embodiment, respectively, and FIG. 11C is a graph showing the phenol removal efficiencies when both a cathode and an anode use the single-atom catalyst electrode compared to when only an anode uses the single-atom catalyst electrode.

### DESCRIPTION OF THE PREFERRED EMBODIMENTS

Hereinafter, the present disclosure will be described in detail with reference to the accompanying drawings. However, these are for only illustrative purposes, and the present disclosure is not limited to specific embodiments to be illustrated.

As used herein, a "single-atom catalyst" refers to a catalyst in which a metal is dispersed on a support at a single-atomic size. A single-atom catalyst (SAC) is a type of catalyst where individual metal atoms are dispersed on a support material, rather than forming larger clusters or nanoparticles. This unique structure maximizes the efficiency of the metal atoms, as each metal atom is exposed and available for catalytic reactions.

A single-atom catalyst, according to a first aspect of the present disclosure, includes a nitrogen-doped carbon structure and a single-atom metal, and the single-atom metal forms a coordination bond with a nitrogen atom of the nitrogen-doped carbon structure. The nitrogen-doped carbon structure is a carbon material that has been modified by incorporating nitrogen atoms into its structure.

The nitrogen-doped carbon structure performs a role as a support where the metal of the single-atom catalyst is dispersed. The nitrogen atom contained in the carbon structure forms a coordination bond with the metal so that the metal is immobilized on the carbon structure at a single-atomic size. When using a metal oxide as the support, hydroxyl radicals (·OH) generated during electrochemical advanced oxidation processes may be adsorbed onto the surface of the metal oxide, so the water treatment efficiency by electrochemical advanced oxidation may be reduced. On the other hand, the carbon structure does not allow hydroxyl radicals to be adsorbed, which is advantageous. The nitrogen doping method of the nitrogen-doped carbon structure and the type of carbon structure are not particularly limited as long as the metal is allowed to be dispersed at a single-atomic size. Further, the nitrogen-doped carbon structure may be obtained by using a suitable nitrogen dopant precursor which includes a compound or material that provides nitrogen serving as a dopant of the nitrogen-doped carbon structure of the single-atom catalyst. A suitable nitrogen dopant precursor is, for instance, 1,10-phenantrolin, but it is not limited thereto; suitable other nitrogen dopant precursors may be other structures where the single-atom metal can form one or more coordination bond(s) with one or more nitrogen atom(s) of the nitrogen-doped carbon structure.

In the embodiment, the carbon structure may be carbon black. Although graphene, graphene oxide, carbon nanotubes (CNTs), graphite, and the like are usable as the carbon structure, the carbon structure is preferably carbon black in terms of costs and ease of mass production.

The single-atom metal of the single-atom catalyst corresponds to a reaction site of the catalyst. The single-atom metal forms a coordination bond with the nitrogen atom of the nitrogen-doped carbon structure and thus is immobilized on the nitrogen-doped carbon structure in the form of a single atom. The single-atom metal is advantageous in providing a large reaction active site compared to the case where metal atoms form clusters. Typically, transition metals such as, but not limited to, Co, Zn, V, Cr, Fe, Ni, Cu, Zr, Nb, and Mo are usable as the single-atom metal of the single-atom catalyst of the present disclosure.

In the embodiment, the single-atom metal may be cobalt (Co). Of all the transition metals mentioned above, cobalt (Co) is advantageous when using the single-atom catalyst in electrochemical advanced oxidation because both activities for hydroxyl radical generation through a water oxidation reaction in an anode and for hydrogen peroxide generation through a selective oxygen reduction reaction in a cathode are high.

In the embodiment, the single-atom metal in the single-atom catalyst may have a content of greater than 0 wt% and less than 3 wt%. When the single-atom metal in the single-atom catalyst has a content of 3 wt% or greater, the excess single-atom metal may form metal oxides. Additionally, due to a lack of spacing between neighboring single-atom metals during a single-atom catalyst preparation process, such as heat treatment, aggregation may occur, forming clusters or nanoparticles. In the embodiment, the single-atom metal in the single-atom catalyst may specifically have a content of greater than 0 wt% and 2 wt% or less, which may more specifically be 0.5 wt% or greater and 1 wt% or less.

According to a second aspect of the present disclosure, provided is a method of preparing a single-atom catalyst, which includes the following steps: preparing a mixed solution by mixing a single-atom metal precursor and a nitrogen dopant precursor in a solvent; preparing a suspension by mixing a carbon structure powder in the mixed solution; preparing a single-atom catalyst precursor by shaking and drying the suspension; and preparing a single-atom catalyst by calcining the single-atom catalyst precursor.

In the step of preparing the mixed solution, the solvent is not only required to be polar so that the single-atom metal precursor and the nitrogen dopant precursor are allowed to be well-dissolved but also required to be volatilized with ease in the step involving drying. In this view, the solvent is preferably an alcohol, preferably ethanol, in terms of reducing manufacturing costs.

The single-atom metal precursor may be a material containing the single-atom metal of the single-atom catalyst. For example, when the single-atom metal is cobalt (Co), the single-atom metal precursor may be a cobalt chloride hydrate.

The nitrogen dopant precursor includes a material that provides nitrogen serving as a dopant of the nitrogen-doped carbon structure of the single-atom catalyst.

In the solvent described above, the single-atom metal precursor and the nitrogen dopant precursor are mixed in a predetermined molar ratio at a predetermined temperature to form the mixed solution.

Then, in the step of preparing the suspension, the carbon structure powder is introduced into the mixed solution in a predetermined molar ratio with respect to the nitrogen dopant precursor, thereby obtaining the suspension. For example, the carbon structure powder may be introduced in a weight ratio in the range of about 8:1 to 10:1 with respect to the dopant precursor.

In the step of preparing the single-atom catalyst precursor, the suspension is shaken for 8 to 12 hours so that the carbon structure powder is allowed to be evenly dispersed in the suspension. Subsequently, the suspension is dried at a temperature in the range of about 80°C to 120°C to volatilize the solvent, thereby obtaining the single-atom catalyst precursor.

In the step of preparing the single-atom catalyst, the single-atom catalyst precursor is subjected to heat treatment for about 1 to 5 hours in an inert gas atmosphere. The calcining temperature may be kept constant or may increase from a low temperature at a predetermined heating rate. For example, the calcining temperature can be in a temperature range of about 500 to 700 °C, and can be reached at a heating rate of about 5 °C/min to about 10 °C/min from room temperature. In one embodiment, the calcining temperature can be specifically about 550 to 700 °C, and more specifically about 600 to 650 °C. Through such calcination, the carbon structure is doped with the nitrogen atom of the nitrogen dopant precursor. In addition, the nitrogen atom of the nitrogen dopant precursor and the metal atom of the single-atom metal precursor form a coordination bond.

As a result, the single-atom catalyst in which the metal atom is disposed on the carbon structure in the form of a single atom is obtained, and the obtained single-atom catalyst may be the single-atom catalyst mentioned above in the first aspect of the present disclosure.

According to a third aspect of the present disclosure, provided is an electrode, which includes: a substrate; and a catalyst layer applied on the substrate through coating, wherein the catalyst layer includes the single-atom catalyst described above.

The substrate performs a role as a support for the catalyst layer and is directly connected to power to deliver supplied current to the catalyst layer when supplying power. To perform such a role, the substrate is required to have high electrical conductivity and high adhesion to the catalyst layer. In addition, the substrate is required to have oxidation stability to maintain electrical conductivity during the electrochemical advanced oxidation process. Any material characterized as above is usable as the substrate without limitation.

In the embodiment, the substrate may include stainless steel. Stainless steel corresponds to a material having high electrical conductivity and adhesion to the catalyst layer described above.

The catalyst layer includes the single-atom catalyst described above and is applied on the substrate through coating. There is no limitation in methods of applying the catalyst layer through coating. The single-atom metal site of the catalyst layer acts as a reaction site, conducting an oxidation or reduction reaction depending on polarity when a current is supplied through the substrate.

In the embodiment, a thickness ratio of the substrate to the catalyst layer may be in the range of 10:1 to 1000:1. When the thickness ratio is less than 10:1 or greater than 1000:1, the electrical energy applied to the catalyst layer through the substrate may be reduced, which may inhibit the oxidation or reduction reaction of the catalyst. In the embodiment, the thickness ratio of the substrate to the catalyst layer may be specifically in the range of 50:1 to 800:1, which may more specifically be in the range of 100:1 to 500:1.

According to a fourth aspect of the present disclosure, provided is an electrochemical cell including the electrode described above as a cathode and/or an anode. The electrochemical cell is advantageous in terms of an electrochemical advanced oxidation process because both the cathode and the anode include the single-atom catalyst. Specifically, the single-atom catalyst of the anode shows high activity for hydroxyl radical generation through the water oxidation reaction, and the single-atom catalyst of the cathode shows high activity for the selective oxygen reduction reaction to generate hydrogen peroxide serving as a hydroxyl radical precursor. In other words, the electrochemical cell may have high hydroxyl radical generation efficiency because both the cathode and anode include the single-atom catalyst. Hydroxyl radicals act as oxidants for organic contaminants. As a result, the electrochemical cell has excellent organic contaminant degradation efficiency.

According to a fifth aspect of the present disclosure, provided is an electrochemical water treatment method using the electrochemical cell described above.

As described above, the electrochemical cell has high organic contaminant degradation efficiency because both the cathode and anode include the single-atom catalyst. High organic contaminant degradation efficiency refers to the effectiveness of a process or method in breaking down and removing organic pollutants from water or other environments. This efficiency is crucial for environmental cleanup and wastewater treatment.

Furthermore, when using existing electrochemical cells including electrodes such as boron-doped diamond (BDD) and lead oxide (PbO₂) as an anode, there is a disadvantage in that hydroxyl radicals are enabled to be formed in the anode only when the pH of the wastewater treated by the water oxidation reaction occurring at the anode is in the range of about 3 to 4, making water treatment challenging for wastewater having pH not falling within the above range. The electrochemical cell, according to the present disclosure, may be advantageous in that the anode includes the single-atom catalyst, making water treatment possible even for wastewater having a wide pH range. Specifically, the electrochemical water treatment using the electrochemical cell may be performed at a pH in the range of about 3 to 9.

In addition, the cathode of the electrochemical cell of the present disclosure includes the single-atom catalyst and thus may be advantageous in that the reactivity of the selective oxygen reduction reaction for hydrogen peroxide generation is higher than that in the case of existing electrochemical cells, further increasing the hydroxyl radical generation efficiency.

Hereinafter, examples of the present disclosure will be further described with reference to specific experimental examples. However, the examples and comparative examples contained in the experimental examples are only to illustrate the present disclosure and do not limit the appended claims. It is apparent to those skilled in the art that various modifications, additions, and substitutions are possible without departing from the scope and technical spirit of the present disclosure, and such modifications, additions, and substitutions fall within the appended claims.

### Preparation Example 1 - Preparation of single-atom catalyst (Co₁-NCB)

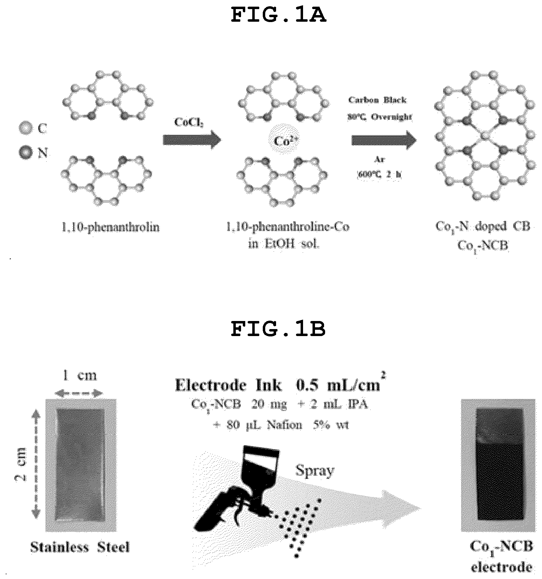

Cobalt (II) chloride hexahydrate (CoCl₂·6H₂O) and 1,10-phenanthroline(C₁₂H₈N₂) were dissolved in a 1:3 molar ratio in pure ethanol. The resulting product was mixed with carbon black powder to obtain a suspension, which was then shaken overnight and dried at a temperature of 80°C. The powder obtained after the drying was calcined at a temperature of 600°C for 2 hours using a tubular furnace (SH-FU-80STG, SH Scientific, Korea) under an Ar atmosphere, wherein the temperature of the furnace was elevated at a heating rate of 10°C/min to reach 600°C. Ultimately, Co₁-NCB powder was obtained (hereafter referred to as 1 wt% Co₁-NCB). The preparation process of the Co₁-NCB powder (single Co atom on nitrogen doped carbon black support) is schematically shown in FIG. 1A. The obtained Co₁-NCB powder was cooled and stored in an Ar atmosphere until further use. Co₁-NCBs with higher Co wt% were synthesized through a similar process, except for using the same molar ratio of cobalt (II) chloride hexahydrate and 1,10-phenanthroline in larger amounts compared to those in 1 wt% Co₁-NCB (hereafter referred to as 3 wt% Co₁-NCB and 5 wt% Co₁-NCB).

### Preparation Example 2 - Manufacture of Co₁-NCB electrode

The manufacturing process of a Co₁-NCB electrode is shown in FIG. 1B. Catalyst ink was prepared by mixing 20 mg of the Co₁-NCB powder with 2 mL of isopropanol (IPA) and 80 µL of Nafion^{®}117 (5% wt). Nafion^{®}117 refers to Tetrafluoroethylene-perfluoro-3,6-dioxa-4-methyl-7-octenesulfonic acid copolymer. The catalyst ink was sonicated for 2 hours and then applied on an electrode substrate (SUS 304, stainless steel substrate based in Japanese industrial standards equivalent to US AISI 304) over a geometric area of 1.0 × 1.0 cm² through spray coating. The amount of the catalyst ink applied on each electrode substrate through spray coating was 0.5 ml. Both the anode and cathode were coated in the same manner.

### Experimental Example 1 - Measurement of surface properties of Co₁-NCB catalyst

The morphology of Co₁-NCBs of Preparation Example 1 was analyzed using an aberration-corrected high-angle annular dark-field scanning transmission electron microscope (HAADF-STEM, JEM134 ARM200CF) at 200 kV. X-ray diffraction (XRD, Rigaku) analysis was performed using Cu Kα radiation (λ = 1.54 Å) within a 20 range of 10° to 80°. X-ray absorption near edge structure (XANES) and extended x-ray absorption fine structure (EXAFS) spectra of the Co K-edge were measured at the 6-BM (BMM) beamline for materials measurement at the National Synchrotron Light Source II (NSLS-II) of Brookhaven National Laboratory (BNL). The measurement was performed in fluorescence mode using a 4-element silicon drift detector (SDD). Co foil was measured simultaneously and used to align the spectra. Cobalt oxide (CoO) and cobalt phthalocyanine (Co-Pc) were used as reference materials. The pre-edge and post-edge backgrounds were subtracted, and the spectra were normalized to 1 based on edge height. Data reduction was performed using Athena, and EXAFS fitting was performed using Artemis from the Demeter package. Wavelet transform (WT) analysis was performed using the Larch package with continuous Cauchy mother wavelet.

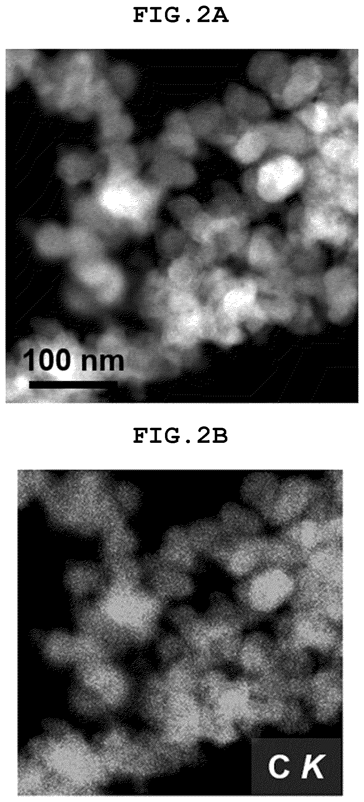

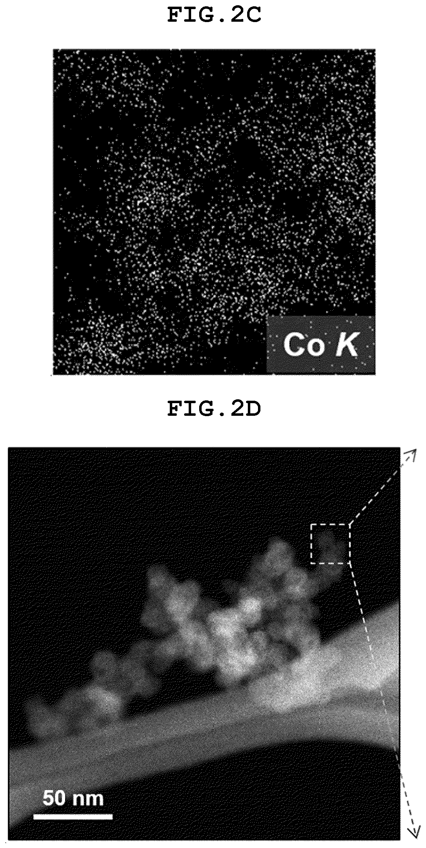

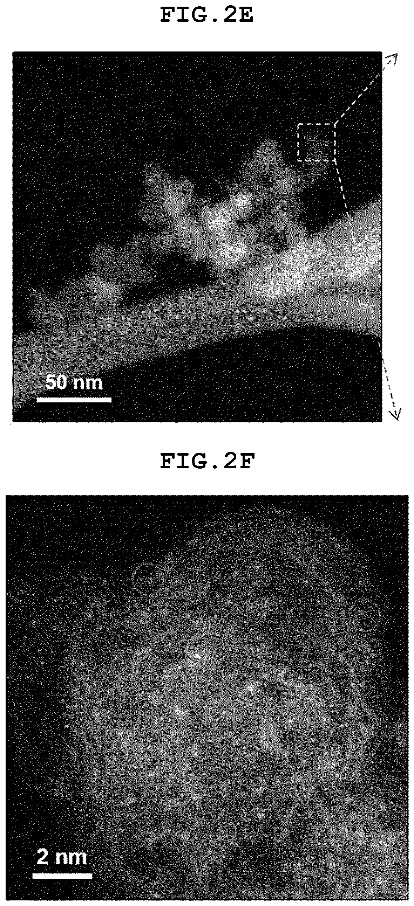

FIG. 2A is an HAADF-STEM image for Co₁-NCB, and FIGS. 2B and 2C are energy dispersive spectroscopy (EDS) element maps of carbon and cobalt, respectively. FIGS. 2A to 2C show that the carbon and cobalt elements are relatively uniformly distributed on a spherical carbon black support having an average diameter of about 30 nm. FIGS. 2D to 2F are HAADF-STEM images of the Co single atoms on carbon black, the images taken at various magnifications. FIGS. 2D to 2F show that Co does not aggregate in a metal cluster or particle form. In contrast, the circled area in FIG. 2F measuring only a few angstroms indicates that Co is atomically immobilized on the carbon black support.

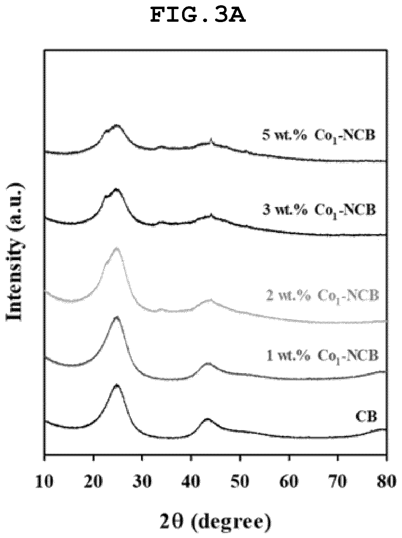

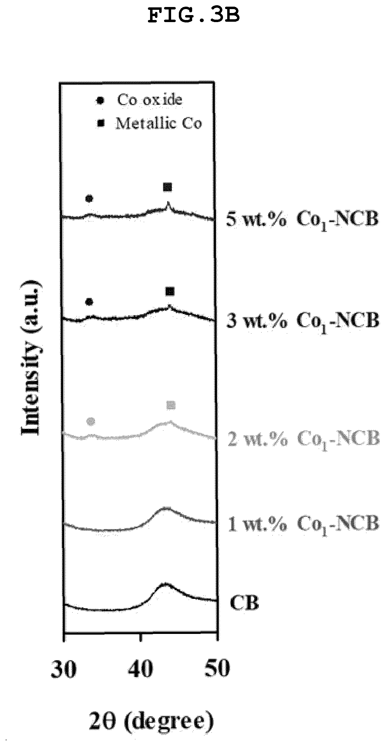

FIGS. 3A and 3B are XRD diagrams, showing that Co₁-NCB containing 1 wt% of Co lacks crystalline Co species. The two broad diffraction peaks at about 24° and 43° correspond to the (002) and (100) planes of carbon black (JCPDS card No. 34-0567).

Referring to FIG. 3B, when the Co loading amount exceeds 1 wt%, characteristic diffraction peaks appear for both metallic and metal oxide forms of Co. Furthermore, in the case where the Co loading amounts are 3 wt% and 5 wt%, the decrease in XRD peak intensity and extension of the CB peak indicate the formation of metallic Co and metal oxide nanoparticles, consistent with transmission electron microscopy (TEM) images.

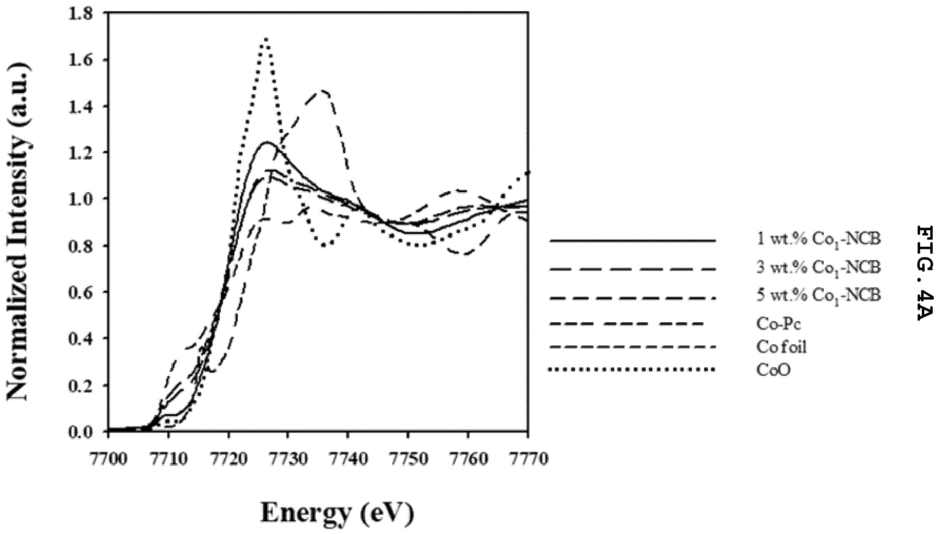

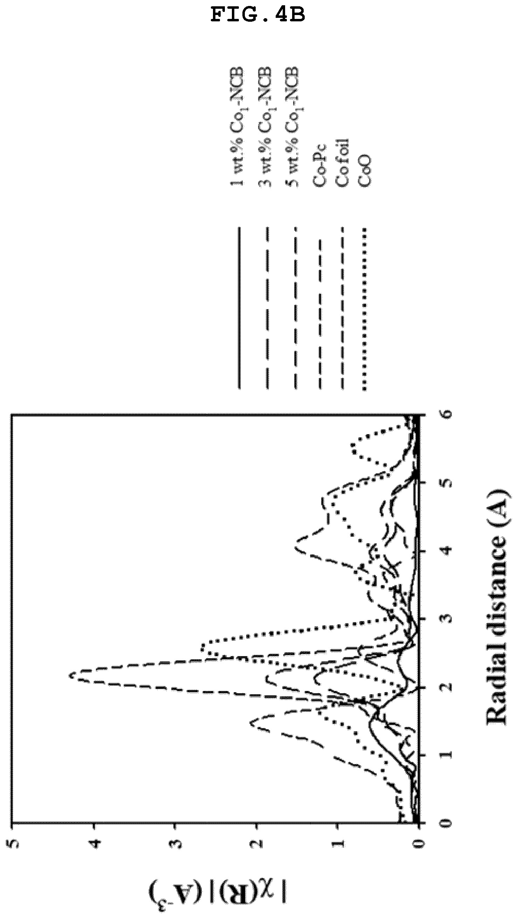

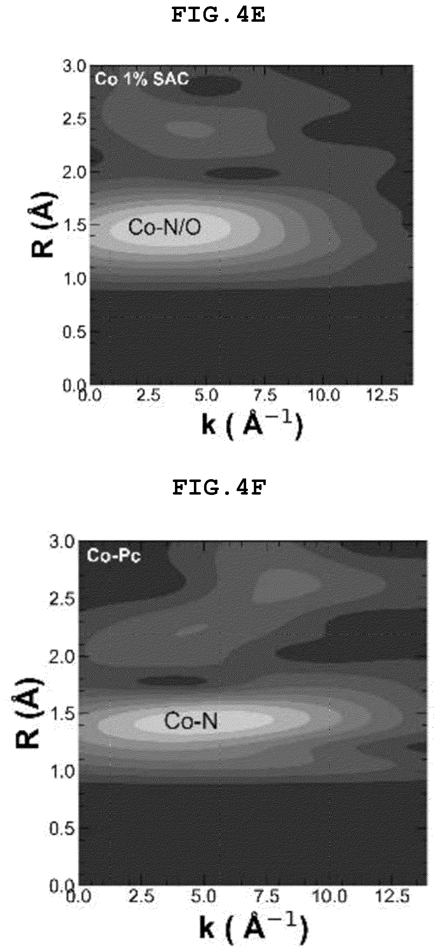

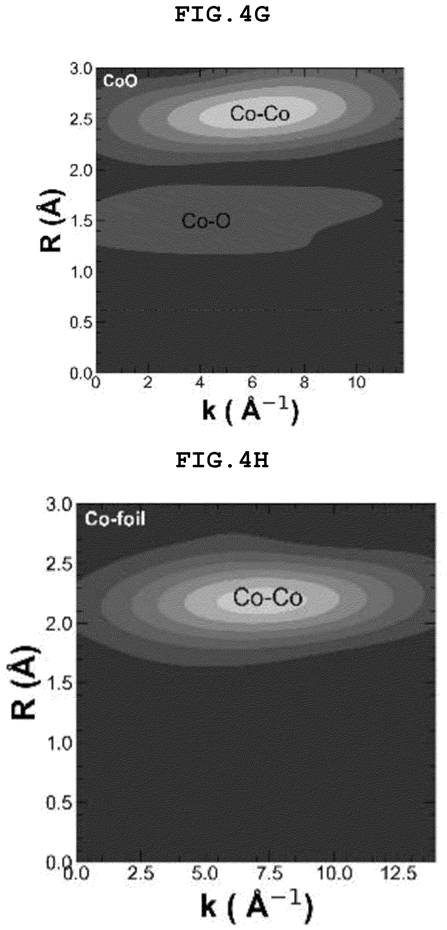

FIG. 4A shows XANES (X-ray absorption Near Edge Structure) spectra of the normalized Co K-edge for Co₁-NCBs, Co-foil, CoO, and Co-Pc, and FIG. 4B shows Fourier-transformed k²-weighted EXAFS spectra of Co₁-NCBs, Co-foil, CoO, and Co-Pc. A rather strong evidence supporting the Co atomic dispersion in NCB was obtained by the XANES and EXAFS (extended X-ray absorption fine structure) analysis. The spectra in FIG. 4A is composed of three regions: i) a weak pre-edge feature associated with the forbidden electron transition to a level of 3d from 1s; ii) a main absorption edge associated with the electron transition from the occupied 1s level to the unoccupied 4p band, which provides a good estimate for the formal oxidation state of Co; and iii) an extended EXAFS usable in determining the localized structure around the absorbing atoms. The XANES spectrum of Co₁-NCB shows that the edge is between the Co foil and the CoO reference, which implies a formal oxidation state between 0 and +2. The spectrum of 5 wt% Co₁-NCB closely resembles that in the case of the Co foil and has a shoulder at about 7712 eV. The spectrum of 3 wt% Co₁-NCB has a smaller shoulder at 7712 eV. In contrast, the XANES spectrum of 1 wt% Co₁-NCB shows almost no shoulders, similar to that in the case of the CoO reference.

Referring to FIG. 4B, it is confirmed that the EXAFS spectra of 3 wt% and 5 wt% Co₁-NCBs closely match the spectrum of the Co foil, whereas the EXAFS spectrum of 1 wt% Co₁-NCB is well-consistent with the spectra of CoO and Co-Pc.

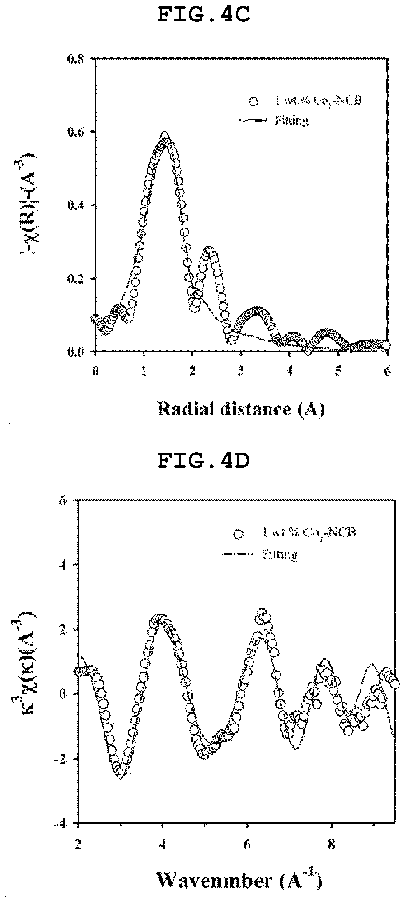

FIGS. 4C and 4D show EXAFS fitting results of the first shell of 1 wt% Co₁-NCB. Referring to FIGS. 4C and 4D, 1 wt% Co₁-NCB exhibits a Co-N/O path length of 1.98 Å in the first shell, which is longer than the Co-N path of Co-Pc. The presence of the Co-O path and a coordination number of 4.96 support the XANES results of 1 wt% Co₁-NCB, which is similar to the case of CoO.

Both 3 wt% and 5 wt% Co₁-NCBs have Co-Co in the first shell, which indicates metal clusters. Such a result is consistent with earlier studies on Co nanoparticles.

FIGS. 4E to 4H show wavelet transform (WT) analysis results of χ (k) for 1 wt% Co₁-NCB, Co-Pc, CoO, and Co foil, respectively. As shown in FIGS. 4E to 4H, the WT contour maximum intensity of 1 wt% Co₁-NCB appears at about 4.9 Å⁻¹, which closely matches those in the case of Co-Pc and CoO. This indicates the presence of the first shell composed of Co-N/O. The contour maximum intensity in the case of 3 wt% and 5 wt% Co₁-NCBs appears to be around 7.5 Å⁻¹, which is similar to that in the case of the Co foil, implying that Co forms a coordination bond with other Co atom-forming clusters. Table 1 below shows the EXAFS fitting parameters at the Co K-edge.

**[Table 1]**

| | **First Shell** | **CN** | **R (Å)** | **σ² (Å)** | **R-factor** |
|---|---|---|---|---|---|
| Co-Pc | Co-N | 4.08 (1.05) | 1.899 (0.02) | 0.002 (0.002) | 0.035 |
| Co-O | Co-O | 6* | 2.101 (0.02) | 0.006 (0.002) | 0.035 |
| Co foil | Co-Co | 12* | 2.503 (0.003) | 0.006 (0.001) | 0.038 |
| Co 1 wt.% | Co-N/O | 4.96 (2.10) | 1.987 (0.05) | 0.018 (0.009) | 0.017 |
| Co 3 wt.% | Co-Co | 2.89 (0.51) | 2.498 (0.007) | 0.004 (0.001) | 0.037 |
| Co 5 wt.% | Co-Co | 4.17 (0.77) | 2.488(0.008) | 0.004 (0.001) | 0.037 |

In this case, R refers to the interatomic distance (bond length between the center atom and the surrounding coordination atom), *σ*² refers to the Debye-Waller factor (DWF), and R-factor refers to the goodness of fit. The amplitude reduction factor (S₀²) was estimated by Co foil fitting. A value of 0.768 was set for the EXAFS fitting of the sample. The * indicates that the coordination number is fixed to a known crystallographic value for the reference compound.

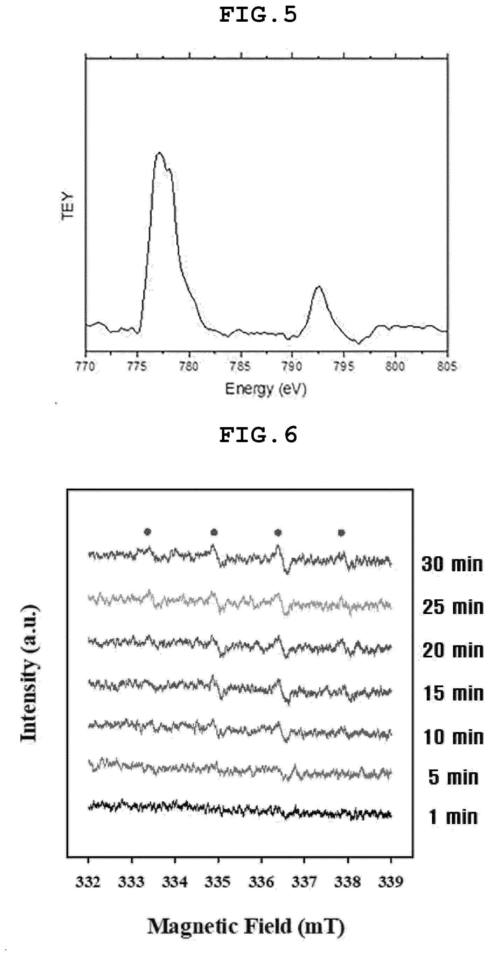

The changes in the oxidation state at the metal sites of Co₁-NCBs with different Co loading amounts were further examined by soft X-ray absorption spectroscopy (XAS). Compared to the XANES and EXAFS (hard XAS) described above, soft XAS provides further surface-intensive information via Co L-edge spectra (transitions to d-orbitals where 2p electrodes are unfilled). Referring to the soft XAS plot in FIG. 5, 1 wt% Co₁-NCB shows that the oxidation state of Co is between 0 and +2, which supports that Co exists in a single-atomic structure. According to the above results, the Co atoms in Co₁-NCBs with high Co loading amounts tended to aggregate in cluster or nanoparticle form during the annealing process due to the excess Co atoms and lack of spacing therebetween. Taking this into account, only the Co₁-NCB electrode with a Co loading amount of 1.0 wt% was considered in the subsequent experimental examples.

### Experimental Example 2 - Hydroxyl radical generation at 1 wt% Co₁-NCB anode

The generation of reactive oxygen species (ROS) was monitored in H-cells divided by Nafion 117 membranes (perfluorosulfonic acid membrane composed of a sulfonated tetrafluoroethylene copolymer). Electron paramagnetic resonance (EPR) spectroscopy (JES-X310, JEOL) was performed using 5,5-dimethyl-1-pyrroline N-oxide (DMPO) as a spin trap agent to identify ROS. Samples were taken at predetermined time intervals and analyzed under the following conditions: a microwave frequency of 9,417 MHz, a microwave power of 5 mW, a modulation frequency of 100 MHz, and a modulation amplitude of 2.0 G.

The electrogenerated hydroxyl radicals are expected from the water oxidation reaction (H₂O → ·OH + H⁺ + e⁻). Other reactive oxygen species (ROS) involving hydroxyl radical generation in the 1 wt% Co₁-NCB anode were analyzed using EPR spectroscopy. The 1:2:2:1 quartet, a feature of DMPO-·OH adducts, was observed at the Co₁-NCB anode 10 minutes after electrolysis. As shown in FIG. 6, the intensity of the adduct signal gradually increased over the course of 30 minutes.

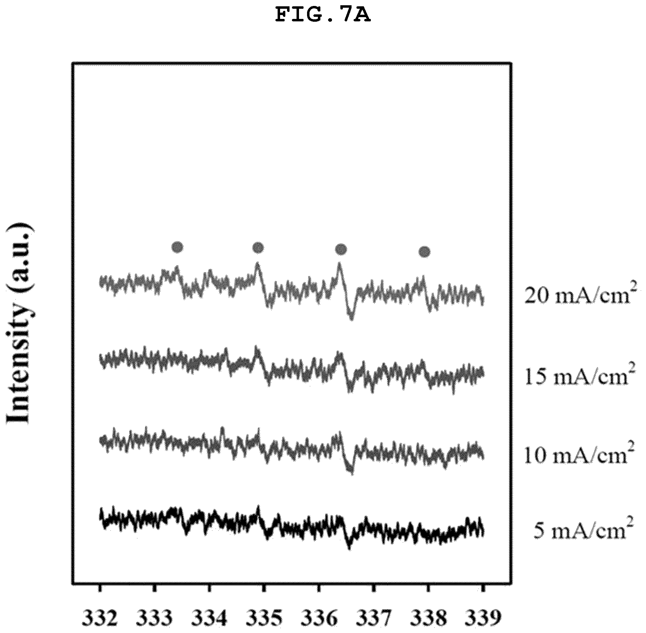

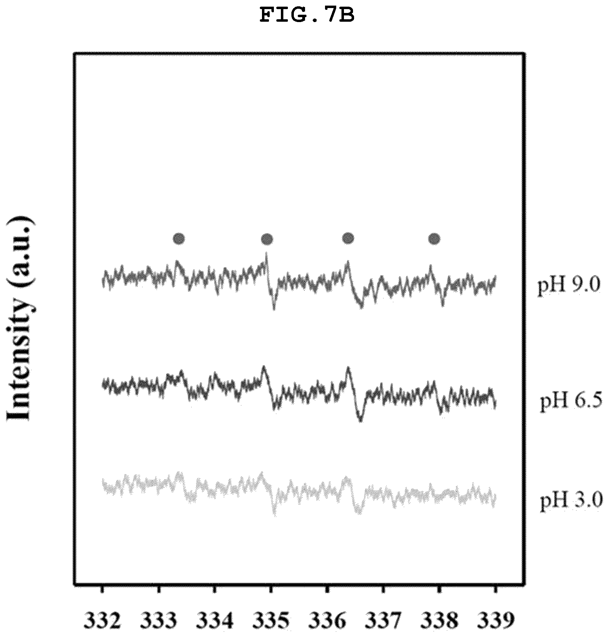

FIG. 7A shows EPR spectra of the DMPO adducts depending on current densities, and FIG. 7B shows EPR spectra of the DMPO adducts depending on initial pH values. Referring to FIG. 7A, the EPR signal intensity of the radicals increased as the current density increased. Furthermore, referring to FIG. 7B, the Co₁-NCB anode exhibited consistent hydroxyl radical generation over a wide range of solution pH from 3 to 9, contrary to earlier studies suggesting that more hydroxyl radicals would be formed under acidic conditions. On the other hand, the 1:1:1:1:1 quadruplet peak of the DMPO-·O₂⁻ adduct was not observed, indicating that there is no competitive electricity generation from other less oxidative species, such as O₂⁻, at the Co₁-NCB anode.

### Experimental Example 3 - Hydrogen peroxide generation at 1 wt% Co₁-NCB cathode

It has been reported that transition metal single-atom catalysts effectively promote H₂O₂ generation through a two-electron selective oxygen reduction reaction (O₂ + 2e⁻ + 2H⁺ → H₂O₂). Therefore, the activation of H₂O₂ for hydroxyl radical generation and the electrocatalytic performance of the Co₁-NCB cathode in the two-electron selective oxygen reduction reaction were further examined.

The H₂O₂ concentration in a solution was quantified by iodine titration using a UV-vis spectrophotometer (Biotek Synergy Mx). Briefly, 1 mL of a sample aliquot was mixed with 1 L of deionized water (DI water), 0.75 mL of potassium hydrogen phthalate (0.1 M), 0.75 mL of potassium iodide (0.4 M), NaOH (0.06 M), and ammonium molybdate tetrahydrate (10⁻⁴ M), followed by vigorously stirring the resulting mixture for 2 minutes. Then, the absorbance was measured at 348 nm.

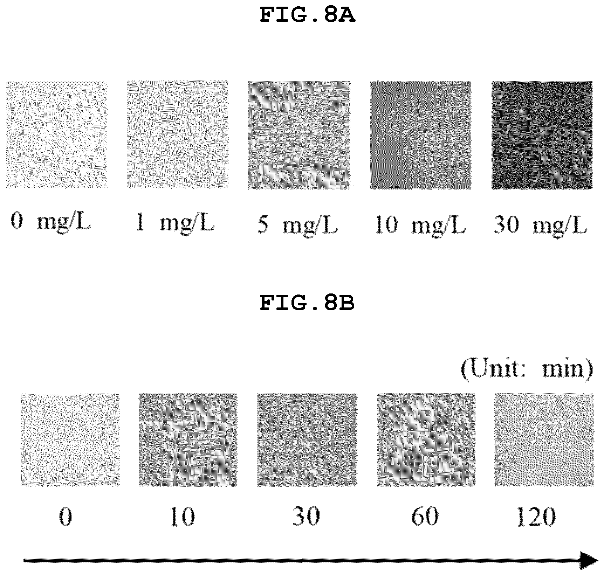

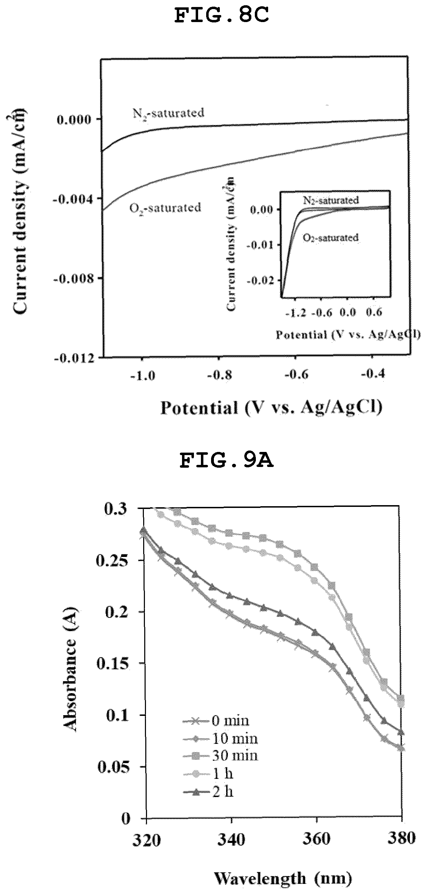

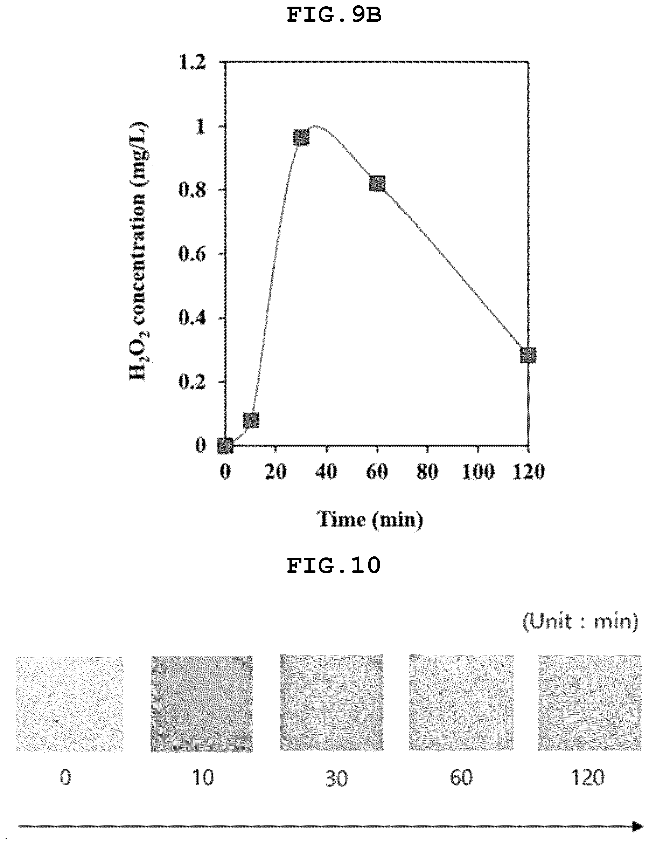

H₂O₂ test strips were used to monitor the H₂O₂ concentration during electrolysis. FIGS. 8A and 8B show that the test strips turn blue 10 minutes after the reaction, indicating that H₂O₂ was generated through the selective oxygen reduction reaction in the Co₁-NCB cathode. FIGS. 9A and 9B are plots showing changes in absorbance at particular wavelength values over time and changes in hydrogen peroxide concentration over time, respectively. Referring to FIG. 9B, the H₂O₂ concentration first increased, reaching about 1 mg/L at maximum after 10 minutes, and then decreased. This was consistent with the colorimetric results in FIG. 9A.

Linear sweep voltammetry (LSV) and cyclic voltammetry (CV) measurement of the Co₁-NCB cathode was performed using a potentiostat (Ivium Technologies, Netherlands). The measurement was all performed in a three-electrode electrochemical cell composed of a platinum (Pt) mesh as the counter electrode, Ag/AgCl as the reference electrode, and Co₁-NCB as the working electrode.

Electrochemical studies were conducted in O₂- and N₂-saturated 100 mM NaClO₄ electrolytes to evaluate the oxygen reduction reaction activity of the cathode. The CV was performed at a scan rate of 10 mV/s within an applied potential window in the range of +1.0 V to -1.5 V (versus Ag/AgCl).

Interestingly, H₂O₂ was generated at the Co₁-NCB cathode of the H-cell only under the O₂-saturated condition, suggesting that the oxygen reduction reaction occurs by consuming oxygen to generate H₂O₂ in the cathode chamber. This was verified in FIG. 10 by detecting H₂O₂ in a single cell where oxygen generated at the Co₁-NCB anode has migrated to the Co₁-NCB cathode. FIG. 8C is a comparative LSV profile of the Co₁-NCB cathode in the O₂/N₂-saturated 100 mM NaClO₄ electrolytes, wherein the small graph corresponds to the CV curve. Referring to FIG. 8C, the occurrence of a reduction current peak at about -0.8 V in the O₂-saturated condition during the CV analysis further allows H₂O₂ synthesis from the oxygen reduction reaction to be confirmed.

### Experimental Example 4 - Electrochemical oxidation of phenol

Organic contaminants present in water are effectively degradable by the hydroxyl radicals generated electrochemically and catalytically at the Co₁-NCB anode and cathode. On this basis, the performance of the Co₁-NCB electrode in electrochemical advanced oxidation processes was evaluated.

Electrochemical oxidation of phenol was performed using a 60 mL of single-compartment cell containing a 100 mM NaClO₄ electrolyte (pH = 6.5, conductivity = 9.91 mS/cm). The electrochemical cell was equipped with the Co₁-NCB electrodes with a defined geometric area of 1.0 cm² (separated using Teflon). The spacing between the electrodes was 1.0 cm. The experiments were performed in constant current mode using a potentiostat (Ivium Technologies, Netherlands) at room temperature under magnetic stirring (500 rpm) while applying a constant current density in the range of 5 to 20 mA/cm².

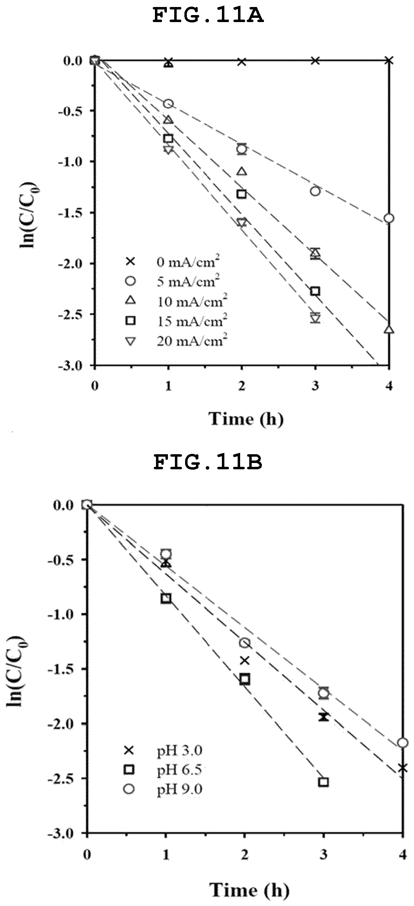

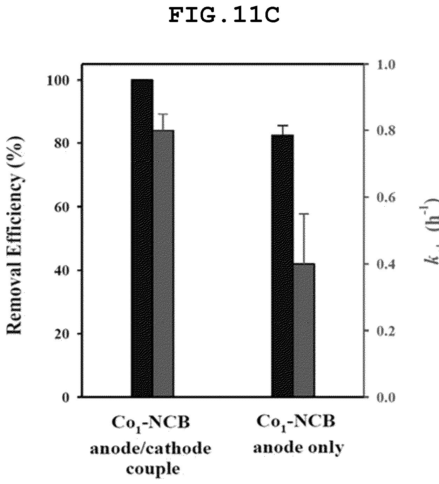

FIGS. 11A and 11B are plots showing the electrochemical oxidation efficiency of phenol using the Co₁-NCB electrode under conditions at different current densities and initial pH values, respectively, and FIG. 11C is a graph showing the phenol removal efficiencies when both the cathode and anode use the Co₁-NCB electrode compared to when only the anode uses the Co₁-NCB electrode.

Referring to FIG. 11A, the phenol removal efficiency increased as the current density increased from 5 mA/cm² to 20 mA/cm². Phenol removal at various current densities also followed pseudo-first order kinetics with rate constants of 0.398, 0.664, 0.794, and 0.832 h⁻¹ (R² > 0.99 for each case). The most important side reactions that can reduce hydroxyl radical generation were (i) H₂ evolution (2H⁺ + 2e⁻ → H₂) at the cathode and (ii) O₂ evolution (2H₂O → O₂ + 4H⁺ + 4e⁻) at the anode, both of which may compete with hydroxyl radical generation. However, no decrease in the phenol removal efficiency caused by hydrogen evolution, one of the side reactions, at the cathode was observed up to a current density of 20 mA/cm², which is presumed to be due to H₂O₂ generation by the oxygen reduction reaction at the cathode and radical generation through the activation of H₂O₂. Additionally, oxygen evolution, another side reaction, at the anode was confirmed not to inhibit radical generation at the Co₁-NCB anode up to a current density of 20 mA/cm².

FIG. 11B shows the electrochemical phenol removal of the two Co₁-NCB electrodes at initial pH values of 3.0, 6.5, and 9.0. Through linear regression analysis for phenol removal over time during the electrochemical oxidation process, the pseudo-first order model (R² > 0.99 for each case) was confirmed. The phenol removal efficiency was highest at pH 6.5. However, the phenol removal efficiencies in all cases exceed 90% within 240 minutes, meaning that the electrochemical advanced oxidation process based on the Co₁-NCB electrode has high electrochemical activity in a wide pH range, and is consistent with the EPR results.

Such results imply that radical generation and phenol removal exhibit similar tendencies in the Co₁-NCB electrode system. Therefore, the impact of Co₁-NCB electrode configuration on radical generation was evaluated on the basis of the phenol removal efficiency. Referring to FIG. 11C, a noticeable improvement in both the phenol removal efficiency and kinetic constant was observed when coupling the Co₁-NCB anode with the Co₁-NCB cathode, compared to the cell in which the Co₁-NCB anode is coupled with a stainless steel cathode. This comparison shows a significant contribution of the Co₁-NCB cathode in the electrochemical advanced oxidation process. Essentially, the Co₁-NCB cathode improves hydroxyl radical generation through the cathode oxygen reduction reaction, increasing the oxidation ability of the system.

The above description is merely an example to which the principles of the present disclosure are applied, and other configurations may be further included without departing from the scope of the present disclosure.

## Claims

1. A single-atom catalyst (SAC) comprising:
a nitrogen-doped carbon structure; and
a single-atom metal, wherein the single-atom metal forms a coordination bond with a nitrogen atom of the nitrogen-doped carbon structure.

2. The catalyst of claim 1, wherein the nitrogen-doped carbon structure is carbon black.

3. The catalyst of claim 1 or 2, wherein the single-atom metal is cobalt (Co).

4. The catalyst of any one of claims 1 to 3, wherein the single-atom metal in the single-atom catalyst has a content of greater than 0 wt% and less than 3 wt%.

5. A method of preparing a single-atom catalyst, the method comprising:
preparing a mixed solution by mixing a single-atom metal precursor and a nitrogen dopant precursor in a solvent;
preparing a suspension by mixing a carbon structure powder in the mixed solution;
preparing a single-atom catalyst precursor by shaking and drying the suspension; and
preparing a single-atom catalyst by calcining the single-atom catalyst precursor.

6. The method of claim 5, which is used to prepare the single-atom catalyst of any one of claims 1 to 5

7. An electrode comprising:
a substrate; and
a catalyst layer applied on the substrate through coating, wherein the catalyst layer comprises the single-atom catalyst of any one of claims 1 to 5.

8. The electrode of claim 7, wherein the substrate comprises stainless steel.

9. The electrode of claim 7 or 8, wherein a thickness ratio of the substrate to the catalyst layer is in a range of 10:1 to 1000:1.

10. An electrochemical cell comprising the electrode of any one of claims 7 to 9 as a cathode and as an anode.

11. An electrochemical water treatment method using the electrochemical cell of claim 10.
